(19) Europäisches Patentamt
European Patent Office
Office européen des brevets

(11) **EP 3 555 331 B1**

(12) **FASCICULE DE BREVET EUROPEEN**

(45) Date de publication et mention
de la délivrance du brevet:
**14.07.2021   Bulletin 2021/28**

(51) Int Cl.:
**C22C 21/02** *(2006.01)*       **C22C 21/04** *(2006.01)*
**B23K 26/32** *(2014.01)*       **C22F 1/043** *(2006.01)*

(21) Numéro de dépôt: **17826268.9**

(22) Date de dépôt: **13.12.2017**

(86) Numéro de dépôt international:
**PCT/FR2017/053531**

(87) Numéro de publication internationale:
**WO 2018/115638 (28.06.2018 Gazette 2018/26)**

(54) **ALLIAGE D'ALUMINIUM POUR SOUDAGE PAR LASER SANS FIL D'APPORT**

ALUMINIUMLEGIERUNG ZUM LASERSCHWEISSEN OHNE FÜLLDRAHT

ALUMINIUM ALLOY FOR LASER WELDING WITHOUT FILLER WIRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **19.12.2016   FR 1662751**

(43) Date de publication de la demande:
**23.10.2019   Bulletin 2019/43**

(73) Titulaire: **Constellium Neuf-Brisach
68600 Biesheim (FR)**

(72) Inventeurs:
- **MASSE, Jean-Philippe
  38000 Grenoble (FR)**
- **CERVI, Laurent
  38423 SAINT JEAN DE MOIRANS (FR)**
- **KEMPA, Stefan
  8245 Feurtalen (CH)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
**EP-A1- 0 645 465        WO-A2-03/066919
US-A1- 2005 155 676**

- **WELLER D ET AL: "Remote Laser Welding of
  Multi-Alloy Aluminum at Close-Edge Position",
  PHYSICS PROCEDIA, ELSEVIER, AMSTERDAM,
  NL, vol. 41, 9 avril 2013 (2013-04-09), pages
  164-168, XP028544679, ISSN: 1875-3892, DOI:
  10.1016/J.PHPRO.2013.03.065**

**Description**

**Domaine de l'invention**

L'invention concerne le domaine des pièces mises en forme par emboutissage ou filage pour l'automobile, en particulier les pièces assemblées par soudage laser à distance sans fil d'apport, ou « Remote laser welding ». Plus particulièrement il s'agit de pièces en alliage de la famille AA6xxx selon la désignation de l' « Aluminum Association », additionnées d'éléments durcissants et destinées à la fabrication par emboutissage de pièces de doublure, de structure ou de renfort de la caisse en blanc des véhicules automobiles.

**Etat de la technique**

En préambule, tous les alliages d'aluminium dont il est question dans ce qui suit sont désignés, sauf indication contraire, selon les désignations définies par l'« Aluminum Association » dans les « Registration Record Series » qu'elle publie régulièrement. Sauf mention contraire, les indications concernant la composition chimique des alliages sont exprimées comme un pourcentage en poids basé sur le poids total de l'alliage ; « ppm » signifie partie par million en poids. Les définitions des états métallurgiques sont indiquées dans la norme européenne EN 515.
Les caractéristiques mécaniques statiques en traction, en d'autres termes la résistance à la rupture Rm, la limite d'élasticité conventionnelle à 0,2 % d'allongement Rp0,2, et l'allongement à la rupture A%, sont déterminées par un essai de traction selon la norme NF EN ISO 6892-1.
Les alliages d'aluminium sont utilisés de manière croissante dans la construction des véhicules automobiles car leur utilisation permet de réduire le poids des véhicules et ainsi diminuer la consommation de carburant et les rejets de gaz à effets de serre.
Les tôles en alliage d'aluminium sont utilisées notamment pour la fabrication de nombreux composants de structure automobile notamment de nombreuses pièces de la « caisse en blanc » parmi lesquelles on distingue : les pièces de peau de carrosserie (ou panneaux extérieurs de carrosserie) comme les ailes avant, le toit ou pavillon, les peaux de capot, de coffre ou de porte ; les pièces de doublure comme par exemple les doublures de porte, d'aile, de hayon ou de capot ; et enfin les pièces de structure, comme par exemple les longerons, les tabliers, les planchers de charges et les pieds avant, milieu et arrière.
De nombreuses pièces de peau et de doublure sont déjà réalisées en tôles d'alliages d'aluminium.
Pour ce type d'applications, un ensemble de propriétés, parfois antagonistes est requis telles que :

- une formabilité élevée à l'état de livraison, état T4, en particulier pour les opérations d'emboutissage,
- une limite d'élasticité contrôlée à l'état de livraison de la tôle pour maîtriser le retour élastique lors de la mise en forme,
- une résistance mécanique élevée après cataphorèse et cuisson des peintures pour obtenir une bonne résistance mécanique en service tout en minimisant le poids de la pièce,
- une bonne capacité à l'absorption d'énergie en cas de choc,
- un bon comportement dans les divers procédés d'assemblage utilisés en carrosserie automobile tels que le soudage par points, le soudage laser, le collage, voire le clinchage ou le rivetage,
- une bonne résistance à la corrosion, notamment la corrosion intergranulaire, la corrosion sous contrainte et la corrosion filiforme de la pièce finie,
- une compatibilité avec les exigences du recyclage des déchets de fabrication ou des véhicules recyclés,
- un coût acceptable pour une production en grande série.

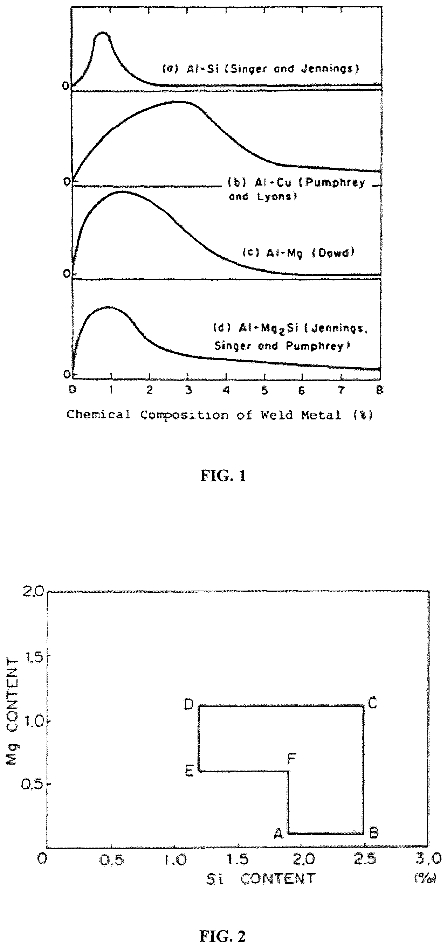

Des solutions consistant de tôles monolithiques qui puissent être assemblées par soudage laser à distance sans fil d'apport et qui présentent les propriétés de caractéristiques mécaniques, formabilité et corrosion, similaires aux tôles en alliage d'aluminium couramment utilisées dans l'industrie automobile sont particulièrement utiles. Par monolithique on entend dans le cadre de la présente invention un produit composé d'un seul alliage et non composite, un produit composite étant par exemple composé de deux alliages co-laminés ou obtenu par coulée « bi-alliages ».
Par ailleurs les solutions connues pour notamment diminuer la sensibilité à la fissuration des alliages d'aluminium et qui permettent plus généralement d'en améliorer la soudabilité sont l'augmentation de la teneur en silicium au-delà de 2 %, en magnésium au-delà de 5 %, et en cuivre au-delà de 6 % (voir figure 1).
Dans le cas des alliages de la série AA6XXX, un fil d'apport est utilisé pour assurer une bonne résistance à la fissuration lors du soudage laser ; celui-ci est constitué d'un alliage de la série AA4XXX à haute teneur en silicium (12 % par exemple) ou un alliage de la série AA5XXX. Il est aussi connu que l'ajout d'éléments tels que le Titane et le Zirconium affine la structure de solidification et de ce fait diminue la sensibilité à la fissuration lors du soudage laser, comme le rapporte « Current issues and problems in laser welding of automotive aluminum alloys », H. Zhao, D. R. White, and T. DebRoy, International Materials Reviews, Volume 44, Issue 6 (01 June 1999), pp. 238-266, dont est extraite la figure 1.

Une tôle monolithique a été développée par « Sky » pour application au soudage à l'arc selon les procédés TIG et MIG et a fait l'objet de la demande US4897124. Le domaine de composition de ladite tôle, défini sur la figure 2, avec une teneur en Fe comprise entre 0.05 % et 0.5 % et au moins un élément du groupe suivant : Mn à une teneur inférieure à 0.6 %, Cr à une teneur inférieure à 0.3 % et Zr également à une teneur inférieure à 0.3 %. Une soudabilité améliorée est revendiquée, tout comme la formabilité améliorée et la résistance à la corrosion.

D'autre part, un produit composite multicouche a été développé par « Novelis » comme le rapportent « Advanced Aluminum 5XXX and 6XXX for complex Door Inner Panels and Consideration for an Aluminum-specific Design », A. Walker, G. Florey - Novelis Switzerland SA; Bad Nauheim - Doors and Closures in Car Body Engineering 2014 et « Laser Remote Welding of Aluminum without filler », R. Brockmann (Trumpf), C. Bassi (Novelis) 2012/04/19.

Il s'agit d'un assemblage composé d'une tôle d'âme, ou cœur, en alliage « Novelis 6200 » plaqué de tôles en alliage de la famille AA4XXX (d'une teneur de 12 % en Si, légèrement inférieure à celle de l'eutectique Al-Si [voir Laser Remote Welding of Aluminum without filler ; R. Brockmann (Trumpf), C. Bassi (Novelis) 2012/04/19]) en peau. Son nom commercial est 6200RW ou « Novelis Advanz s200 RW ». Il présente une soudabilité améliorée lors du soudage laser à distance sans fil d'apport, et pas de fissure dans le joint soudé comme le précise « Laser Remote Welding of Aluminum without filler », R. Brockmann (Trumpf), C. Bassi (Novelis) 2012/04/19. Toutefois ce type de produit non monolithique n'est pas idéal en termes de coûtet recyclage.

La demande de brevet JP2006104580 divulgue une tôle en alliage d'aluminium de la série 3XXX présentant une bonne soudabilité laser pulsé, de composition, en % en poids, Si : >0,20 à 0,60, Fe : 0,25 à 0,55, Cu : 0,10 à 0,35 , Mn : 0,9 à 1,5 , Mg, 0,25 à 0,55, reste aluminium et impuretés inévitables, la valeur totale de Si, Fe, Cu et Mg étant inférieure ou égale à 1,5 % en poids. Ces tôles en alliage 3XXX ne présentent pas les caractéristiques mécaniques souhaitées.

La demande de brevet US2005/0155676 décrit des pièces de sécurité ou de structure obtenu par moulage sous pression faits dans un alliage contenant Si : 2 à 6, Mg < 0,40, Cu < 0,30, Zn < 0,30, Fe < 0,50, Ti < 0,30 au moins un élément pour réduire l'adhérence au moule tel que Mn (0,3 - 2), Cr (0,1 - 0,3) Co (0,1 - 0,3) V (0,1 à 0,3) ou Mo (0,1 - 0,4) et au moins un éléments pour modifier les eutectiques tel que Sr (50 - 500 ppm), Na (20 - 100 ppm) ou Ca (30 - 120 ppm). Ces produits moulés ne présentent pas les caractéristiques géométriques et mécaniques souhaitées

La demande de brevet JP 1995109537 décrit un alliage Al-Si hypo-eutectique utilisable pour les produits moulés, extrudés et forgés qui a une composition contenant, en % en poids, Si : 3,3 - 5,5, Mg : 0,2 - 0,7, Ti : 0,01 - 0,2, B : 0,0001 - 0,01, Fe ≤ 0,2, P ≤ 0,005 et Ca ≤ 0,005 et satisfaisant le rapport P/Ca ≤ 1.0 en poids. Ces produits ne présentent pas les caractéristiques géométriques et mécaniques souhaitées

La demande de brevet US2005/0100473 décrit des alliages d'aluminium et des produits moulés contenant en % en poids, Si : 4 - 12, Cu < 0,2, Mg : 0,1 - 0,5, Ni : 0,2 - 3,0, Fe : 0,1 - 0,7, Ti : 0,15 - 0,3 et le reste aluminium et impuretés. Ces produits moulés ne présentent pas les caractéristiques géométriques et mécaniques souhaitées

**Problème posé**

Les alliages d'aluminium de la série AA6XXX, largement utilisés dans l'industrie automobile, sont connus pour être très sensibles à la fissuration lors de l'assemblage par soudage laser, en particulier en provoquant des fissures critiques dans le cordon soudé.

Le problème posé est le développement d'une tôle en alliage d'aluminium ne formant pas de fissures critiques lors de l'assemblage par soudage laser à distance sans fil d'apport et présentant des caractéristiques mécaniques élevées. Cette tôle en alliage d'aluminium, doit présenter les mêmes performances ou des performances améliorées en résistance mécanique, formabilité, et corrosion, que les alliages d'aluminium utilisés couramment.

**Objet de l'invention**

L'invention a pour objet un procédé de soudage de demi-produits monolithiques en alliage d'aluminium par laser à distance sans fil d'apport, comportant les étapes suivantes :

- Approvisionnement d'au moins deux demi-produits monolithiques en alliage d'aluminium dont l'un au moins est une tôle laminée de composition (% en poids) :

> Si : 2,5-14, de préférence 2,5-10,0 de préférence 2,7-5,0
> Fe : 0,05-0,8 de préférence 0,15-0,60
> Cu : 0,25 - 1.0 de préférence 0,30 - 0.9 de manière préférée 0,5 - 0,8,
> Mg : 0,05-0,8, de préférence 0,2 - 0,7 de manière préférée 0,3-0,5
> Mn : ≤ 0,70
> Cr : ≤ 0,35
> Ti : 0,02-0,30

Sr jusqu'à 500 ppm
Na jusqu'à 200 ppm
Sb jusqu'à 0,15 %,
impuretés inévitables < 0,05 chacune et < 0,15 au total, reste aluminium,

- Soudage des demi-produits en alliage d'aluminium par laser à distance sans fil d'apport.

Selon un mode de réalisation préférentiel, les dits demi-produits constituent des composants de structure automobile et/ou des composants de caisse en blanc automobile et/ou des composants de peau de véhicule automobile et/ou des composants d'ouvrants de véhicule automobile.

Enfin, l'objet de l'invention inclut également un composant de structure, de caisse en blanc, de peau ou d'ouvrant de véhicule automobile obtenu par le procédé selon l'invention.

## Description des figures

La figure 1 représente l'effet de la composition chimique du métal soudé sur la « susceptibilité relative » à la crique, ou sensibilité à la fissuration pour divers alliages binaires.

La figure 2 représente le domaine de composition revendiqué par « Sky » selon la demande US4897124.

La figure 3 illustre schématiquement une configuration typique de dispositif de soudage laser vu en coupe transversale, avec en 1 le cordon de soudure laser.

La figure 4 illustre le même dispositif de soudage laser vu de dessus avec en noir (2) les fixations ou bridages.

La figure 5 précise les dimensions en mm des outils utilisés pour déterminer la valeur du paramètre connu de l'homme du métier sous le nom de LDH (Limit Dome Height) caractéristique de l'aptitude à l'emboutissage du matériau.

La figure 6 est un schéma des échantillons utilisés pour les essais de résistance à la corrosion inter-granulaire.

La figure 7 illustre schématiquement une configuration de dispositif de soudage bout à bout pour la réalisation d'un flan rabouté.

La figure 8 illustre schématiquement la mesure de pliage.

La figure 9 illustre schématiquement la mesure de l'angle a de pliage.

## Description de l'invention

Le procédé selon l'invention comporte l'approvisionnement de demi-produits monolithiques en alliage d'aluminium, typiquement des tôles laminées ou des profilés extrudés. Au moins un des demi-produits est une tôle laminée. Dans un mode de réalisation de l'invention, au moins deux des deux demi-produits sont des tôles laminées. Dans un autre mode de réalisation de l'invention au moins un second demi-produit est un profilé extrudé.
Le procédé de fabrication des tôles monolithiques comporte typiquement la coulée, le réchauffage/homogénéisation, le laminage à chaud, le laminage à froid, la mise en solution et trempe.

La coulée est généralement du type semi-continu vertical de plaques suivie du scalpage, ou éventuellement du type continu.

Le réchauffage des plaques est réalisé typiquement à une température de l'ordre de 550°C pendant au moins 4 h, afin de globuliser les particules de silicium en excès lorsque sa teneur est supérieure à 1.2 %, et obtenir des particules d'aspect circulaire et réparties de manière homogène dans l'épaisseur de la tôle. Cette température est avantageusement comprise entre le solvus et le solidus de l'alliage considéré.

Après réchauffage les plaques subissent typiquement un laminage à chaud puis un laminage à froid. Le laminage à chaud n'est pas différent d'un laminage à chaud d'un alliage de la famille AA6XXX utilisé pour les renforts de porte par exemple.

La mise en solution, suivant le laminage à froid est typiquement réalisée à une température de l'ordre de 550°C, afin de recristalliser et de remettre en solution tout le Mg et le Si libre, avant la trempe. Cette température est avantageusement comprise entre le solvus et le solidus de l'alliage, tout comme pour le réchauffage.

Dans le cas où un second demi-produit est un profilé, les étapes typiques de fabrication sont similaires : La coulée des billettes est aussi généralement du type semi-continu vertical suivi du scalpage éventuel.

Le réchauffage des billettes avant ou après leur découpe à longueur est réalisé typiquement à une température de l'ordre de 550°C. Cette température est avantageusement comprise entre le solvus et le le solidus de l'alliage considéré.

Après réchauffage les billettes sont filées avec mise en solution et trempe sur presse ou séparée.

Dans ce dernier cas, la mise en solution est typiquement réalisée à une température de l'ordre de 550°C, afin de remettre en solution tout le Mg et le Si libre, avant la trempe. Cette température est plus avantageusement comprise entre le solvus et le solidus de l'alliage tout comme pour le réchauffage.

La composition chimique de ladite tôle laminée du procédé selon l'invention est (% en poids) :

Si : 2,5-14, de préférence 2,5-10,0 de préférence 2,7-5,0
Fe : 0,05-0,8 de préférence 0,15-0,60
Cu : 0,25 - 1.0 de préférence 0,30 - 0.9 de manière préférée 0,5 - 0,8,
Mg : 0,05-0,8, de préférence 0,2 - 0,7 de manière préférée 0,3-0,5
Mn : ≤ 0,70
Cr : ≤ 0,35
Ti : 0,02-0,30
Sr jusqu'à 500 ppm
Na jusqu'à 200 ppm
Sb jusqu'à 0,15 %,
impuretés inévitables < 0,05 chacune et < 0,15 au total, reste aluminium,

Les plages de concentration imposées aux éléments constitutifs de ce type d'alliage s'expliquent par les raisons suivantes :

Si : La présence de Silicium à une teneur minimum de 2,5 % permet d'obtenir une amélioration significative de la soudabilité. Au-delà d'une teneur de 5 %, la formabilité commence à décroitre pour devenir problématique au-delà de 14% et dans certains cas au-delà de 10,0%.

Une teneur préférentielle en silicium est de 2,7 à 5,0 %.

Fe : Une teneur en Fe minimale de 0,05 % permet de manière inattendue d'améliorer la soudabilité, tandis que pour une teneur supérieure à 0,8 % la formabilité est significativement dégradée.

Une teneur préférentielle en fer est de 0,15 à 0,60 %.

Cu : de façon surprenante, les présents inventeurs ont constaté que l'addition de cuivre, tout en améliorant les caractéristiques mécaniques, ne dégrade significativement ni la soudabilité ni la résistance à la corrosion. De préférence de préférence la teneur en cuivre est ≥ 0,30 % et préférentiellement ≥ 0,5 % ou même ≥ 0,6 %. Avantageusement la teneur maximale en cuivre est de 0,9 % et de préférence 0,8 %.

Mg : Une teneur minimale en Mg de 0,05% et de préférence de 0,2 % est nécessaire pour la formation suffisante de précipités $Mg_2Si$ afin d'obtenir les caractéristiques mécaniques requises après cuisson des peintures. Son influence négative sur le soudage impose une limitation à une teneur maximum de 0,8 %.

Une teneur préférentielle en magnésium est de 0,3 à 0,5 %. Dans un mode de réalisation avantageux, on associe une teneur en cuivre de 0,5 - 0,8% et une teneur en Mg de 0.3 - 0.5%.

Cr : Sa teneur est limitée à 0,35 %.

Une addition de 0,05 % ou plus a un effet durcissant, mais au-delà de 0,35 %, le chrome forme des phases intermétalliques néfastes.

Une teneur préférentielle en chrome est de 0,05 à 0,25 %.

Mn : sa teneur est limitée à 0,70 %. Une addition de manganèse au-delà de 0,05 % peut accroître les caractéristiques mécaniques par effet de solution solide, mais au-delà de 0,70%, elle ferait très fortement décroître la formabilité, phénomène déjà perceptible au-delà de 0 ,30 %. Dans un mode de réalisation, la teneur en Mn est de 0,05 à 0,30 %. Dans un autre mode de réalisation de l'invention, la teneur maximale de Mn est 0,2% et de préférence 0.05 %.

Ti : Il a été noté que cet élément avait pour effet d'affiner la structure de solidification et donc diminuer la sensibilité à la fissuration. Une teneur minimale en Ti de 0,02 % est donc nécessaire. Préférentiellement la teneur minimale en Ti est de 0,05 % et de manière préférée de 0,10%. Par contre, une teneur maximum de 0,30 % et de préférence de 0,25% est requise pour ne pas former des phases primaires lors de la coulée verticale, qui ont un effet néfaste sur les caractéristiques mécaniques et la formabilité.

Sr : l'ajout de Sr est optionnel. A une teneur inférieure à 500 ppm, il permet d'agir sur la forme de l'eutectique Al-Si lors de la solidification, favorise l'obtention de particules de Si d'aspect circulaire et réparties de manière homogène après réchauffage et avant laminage à chaud. Au-delà, son effet sur le gazage de la plaque coulée devient significatif.

Une teneur préférentielle en strontium est de 200 à 400 ppm.

L'utilisation d'autres éléments dits « modificateurs, tels que le sodium Na à des teneurs jusqu'à 200 ppm (de préférence de 20 à 200 ppm) ou l'antimoine Sb à des teneurs jusqu'à 0,15 % (de préférence de 0,04 à 0,15 %) est également possible.

Une teneur préférentielle en Na est de 20 à 200 ppm.

Une teneur préférentielle en Sb est de 0.04 à 0.15%

Dans un mode de réalisation avantageux, l'addition de Sr seul est choisie.

Les autres éléments ne sont pas ajoutés intentionnellement, il s'agit d'impuretés inévitables dont la teneur est < 0,05 chacune et < 0,15 au total, le reste est de l'aluminium.

Les caractéristiques mécaniques de la tôle laminée utilisée pour le procédé selon l'invention sont avantageusement à l'état T4 de livraison $Rp_{0,2} \geq 165$ MPa et préférentiellement $Rp_{0,2} \geq 175$ MPa et/ou $Rm \geq 310$ MPa et préférentiellement $Rm \geq 330$ MPa. Les caractéristiques mécaniques de la tôle laminée utilisée pour le procédé selon l'invention sont avantageusement après traitement représentatif de la cuisson des peintures, écrouissage en traction de 2% suivi de 20 min à 180°C, $Rp_{0,2} \geq 240$ MPa et préférentiellement $Rp_{0,2} \geq 260$ MPa et/ou $Rm \geq 340$ MPa et préférentiellement $Rm \geq 360$ MPa.

Les caractéristiques mécaniques de la tôle après un traitement simulant la précipitation post-formage, écrouissage en traction de 5% selon la direction perpendiculaire à la direction de laminage suivi de 30 min à 205°C, sont avantageusement $Rp_{0,2} \geq 280$ MPa, préférentiellement $Rp_{0,2} \geq 310$ MPa et de manière préférée $Rp_{0,2} \geq 350$ MPa et/ou $Rm \geq 330$ MPa et préférentiellement $Rm \geq 360$ MPa et de manière préférée $Rm \geq 380$ MPa et/ou un angle de pliage normalisé $\alpha_{norm}$ mesuré selon la norme NF EN ISO 7438 et la procédure VDA 238-100 d'au moins 50° et de préférence d'au moins 60°. De préférence la tôle laminée utilisée a une épaisseur comprise entre 0,5 mm et 4 mm et de manière préférée entre 1 et 3 mm.

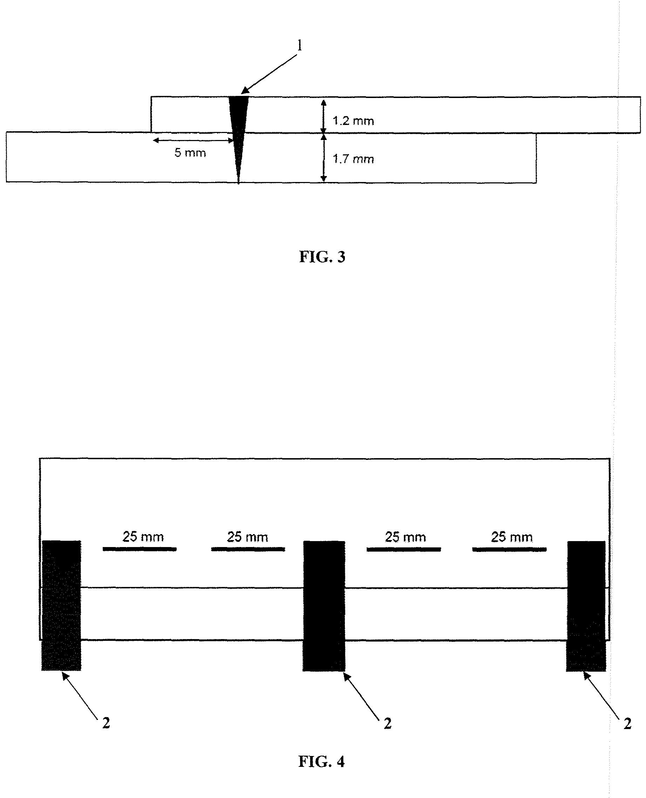

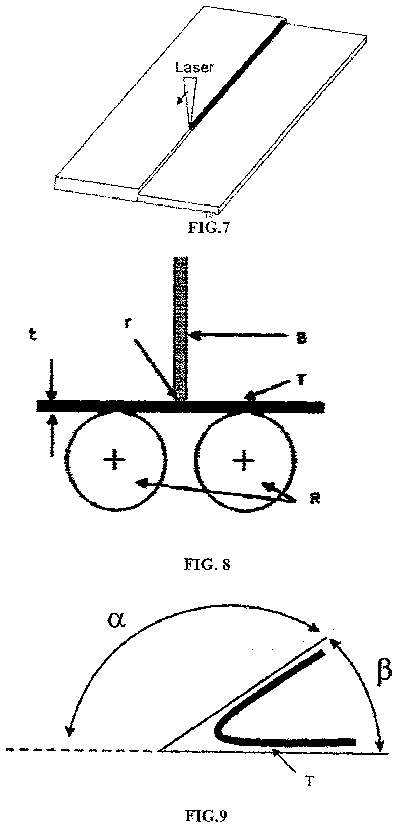

Le procédé selon l'invention peut notamment être utilisé pour du soudage par superposition, tel qu'illustré sur la figure 3 ou du soudage en configuration bout à bout tel qu'illustré par la figure 7. Il a par ailleurs été noté que la tendance à la fissuration lors du soudage était nettement moindre lorsque ladite tôle laminée de composition selon l'invention était positionnée au-dessus du ou des autres demi-produit(s) lors du soudage, soit du côté de l'impact du faisceau laser. Cet avantage est obtenu dans le cas du soudage par superposition. Ainsi dans un mode de réalisation avantageux la tôle laminée de composition selon l'invention est positionnée du côté de l'impact du faisceau laser.

Avantageusement la configuration de soudage bout à bout permet d'obtenir après soudage un flan rabouté de préférence caractérisé en ce que au moins deux des dits demi-produits ont une épaisseur différente et/ou une résistance mécanique différente. L'invention concerne également un flan rabouté constitué de plusieurs demi-produits dont l'un au moins est une tôle laminée ayant une composition selon l'invention et étant assemblé par soudage bout à bout selon un procédé de soudage sans fil d'apport selon l'invention.

L'avantage essentiel de l'invention est la possibilité d'utiliser une tôle laminée monolithique, présentant une soudabilité améliorée en particulier lors du soudage par laser à distance sans fil d'apport, procédé de soudage généralement connu par l'homme du métier sous l'appellation de « Remote Laser Welding », ainsi que des propriétés de formabilité et de résistance à la corrosion au moins comparables à celles des alliages de la famille AA6XXX classiquement utilisée pour les pièces d'automobile et des caractéristiques mécaniques élevées.

Les applications visées couvrent les composants de structure automobile notamment de nombreuses pièces de la « caisse en blanc » parmi lesquelles on distingue : les pièces de peau de carrosserie (ou panneaux extérieurs de carrosserie) comme les ailes avant, le toit ou pavillon, les peaux de capot, de coffre ou de porte ; les pièces de doublure comme par exemple les doublures de porte, d'aile, de hayon ou de capot ; et enfin les pièces de structure, comme par exemple les longerons, les tabliers, les planchers de charges et les pieds avant, milieu et arrière. Avantageusement l'invention permet de réaliser des pièces de renfort telles que des renforts de portière.

Le procédé selon l'invention dans lequel lesdits demi-produits constituent des composants de structure automobile, des composants de caisse en blanc automobile, des composants de peau de véhicule automobile, des composants d'ouvrants de véhicule automobile est avantageux.

Le procédé selon l'invention permet ainsi d'obtenir des composants de structure, de caisse en blanc, de peau ou d'ouvrant de véhicule automobile particulièrement avantageux.

## Exemples

On a préparé différents alliages dont les compositions sont données dans le Tableau 1. Les alliages 8 et 9 ont une composition selon l'invention. Les alliages 1 à 7 sont des alliages de référence.

**Tableau 1.** Composition des différents alliages testés.

| Alliage | Eléments d'alliage (% en Poids) | | | | | | | | |
|---|---|---|---|---|---|---|---|---|---|
| | Si | Fe | Cu | Mn | Mg | Cr | Zn | Ti | Sr |
| 1 | 3,39 | 0,24 | 0,200 | 0,10 | 0,24 | 0 | 0 | 0,03 | 0 |
| 2 | 3,50 | 0,24 | 0 | 0,10 | 0,80 | 0 | 0,035 | 0,14 | 0,03 |
| 3 | 3,30 | 0,26 | 0,021 | 0,10 | 0,83 | 0,10 | 0 | 0,02 | 0,03 |
| 4 | 4,52 | 0,42 | 0,021 | 0,10 | 0,25 | 0,10 | 0 | 0,11 | 0 |
| 5 | 2,73 | 0,41 | 0,021 | 0,11 | 0,25 | 0,11 | 0 | 0,11 | 0 |
| 6 | 2,74 | 0,39 | 0,048 | 0,10 | 0,25 | 0,10 | 0 | 0,10 | 0 |
| 7 | 2,78 | 0,40 | 0,100 | 0,10 | 0,24 | 0,10 | 0 | 0,10 | 0 |
| 8 (Invention) | 4,57 | 0,16 | 0,41 | 0,02 | 0,71 | 0,11 | 0 | 0,15 | 0,03 |
| 9 (Invention) | 4,60 | 0,16 | 0,68 | 0,02 | 0,41 | 0,11 | 0 | 0,15 | 0,03 |

Des tôles d'épaisseur 1,2 et 1,7 mm ont été préparées à partir de ces alliages selon les paramètres de fabrication récapitulés dans le Tableau 2.

**Tableau 2.** Paramètres de fabrication

| Alliage | Paramètres procédé | | | | | | | | | | |
|---|---|---|---|---|---|---|---|---|---|---|---|
| | Température de réchauffage (°C) | temps de maintien au réchauffage (h) | Température de début de laminage à chaud (°C) | Température finale de laminage à chaud (°C) | épaisseur après laminage à chaud (mm) | épaisseur après laminage à froid (mm) | Température de mise en solution (°C) | Temps de maintien à la température de mise en solution (s) | Température en fin de trempe (°C) | Température de pré revenu (°C) | Temps de pré revenu (h) |
| 1 | 550 | 4 | 530 | 280 | 6 | 1.2/1.7 | 550 | 120 | 85 | 85 | 8 |
| 2 | 550 | 4 | 530 | 280 | 6 | 1.2/1.7 | 550 | 120 | 20 | 85 | 8 |
| 3 | 550 | 4 | 530 | 280 | 6 | 1.2/1.7 | 550 | 120 | 20 | 85 | 8 |
| 4 | 550 | 4 | 530 | 280 | 6 | 1.2/1.7 | 550 | 120 | 20 | 85 | 8 |
| 5 | 550 | 4 | 530 | 280 | 6 | 1.2/1.7 | 550 | 120 | 20 | 85 | 8 |
| 6 | 550 | 4 | 530 | 280 | 6 | 1.2/1.7 | 550 | 120 | 20 | 85 | 8 |
| 7 | 550 | 4 | 530 | 280 | 6 | 1.2/1.7 | 550 | 120 | 20 | 85 | 8 |
| 8 | 550 | 4 | 530 | 280 | 6 | 1.2/1.7 | 550 | 120 | 20 | 85 | 8 |
| 9 | 550 | 4 | 530 | 280 | 6 | 1.2/1.7 | 550 | 120 | 20 | 85 | 8 |

**Essais de soudage**

Le soudage laser a été effectué par recouvrement d'une tôle de 1.2 mm sur une tôle de 1.7 mm de même composition chimique, selon les schémas des figures 3 et 4.
Pour chaque alliage, 16 cordons de soudures sont réalisés.
Les paramètres de soudage laser utilisés sont les suivants :

- Puissance du laser : 3 kW
- Vitesse de soudage : 3,4 m/min
- Pas de fil d'apport
- Pas de gaz de protection

Les fissures ont été évaluées selon la méthode suivante :
Une coupe transversale est réalisée sur chaque cordon de soudure.
Après enrobage et polissage, chacune des coupes est observée en microscopie optique afin de déterminer la taille des fissures éventuelles dans le cordon.
Une moyenne est ensuite réalisée sur les 16 coupes afin d'obtenir la fissure moyenne. Il est aussi possible de déterminer la fraction de fissures dont la longueur est supérieure à une certaine longueur.
En l'occurrence, pour chacun des alliages, la longueur moyenne des fissures, la fraction de fissures dont la longueur dépasse 0,2 fois l'épaisseur de la tôle supérieure, et la fraction de fissures dont la longueur dépasse 0,4 fois l'épaisseur de la tôle supérieure sont déterminées.
L'ensemble est récapitulé dans le Tableau 3.

**Tableau 3** Résultats des essais de soudage

| Alliage | Performance en soudage | | |
|---|---|---|---|
| | Longueur moyenne de fissures (*1.2 mm) | Fraction de fissures de longueur supérieure à 0.2*1.2mm | Fraction de fissures de longueur supérieure à 0.4*1.2mm |
| 1 | 0,19 | 0,38 | 0,13 |
| 2 | 0,33 | 0,56 | 0,31 |
| 3 | 0,54 | 0,88 | 0,63 |
| 4 | 0,06 | 0,00 | 0 |
| 5 | 0,29 | 0,50 | 0,25 |
| 6 | 0,44 | 0,69 | 0,50 |
| 7 | 0,39 | 0,69 | 0,38 |
| 8 | 0,44 | 0,69 | 0,50 |
| 9 | 0,06 | 0,00 | 0 |

Les exemples de l'invention présentent une soudabilité suffisante (exemple 9) ou même excellente (exemple 8) contrairement à ce qui aurait pu être attendu compte tenu de l'addition de cuivre. Ainsi la comparaison des exemples de référence 4, 5 et 6 semble montrer une dégradation de la soudabilité avec l'augmentation de la teneur en cuivre alors que les alliages selon l'invention dont la teneur en cuivre est encore supérieure présentent une soudabilité suffisante. L'exemple de référence 3 présente des caractéristiques de soudage insuffisantes.

**Essais de traction**

Les essais de traction à température ambiante ont été réalisés selon la norme NF EN ISO 6892-1 avec des éprouvettes non proportionnelles de géométrie largement utilisée pour les tôles et correspondant au type d'éprouvette 2 du tableau B.1 de l'annexe B de la norme. Ces éprouvettes possèdent notamment une largeur de 20 mm et une longueur calibrée de 120 mm. L'allongement pour cent après rupture est mesuré à l'aide d'un extensomètre de base 80 mm et est donc noté $A_{80}$ conformément à la norme.
Comme mentionné dans la note du paragraphe 20.3 de la norme ISO 6892-1 :2009(F) (page 19), il est important de noter que « des comparaisons d'allongement pour cent sont possibles uniquement lorsque la longueur entre repères ou la longueur de base de l'extensomètre, la forme et l'aire de la section transversale sont les mêmes ou lorsque le coefficient de proportionnalité, k, est le même. »

Notamment, il n'est pas possible de directement comparer des valeurs d'allongements pour cent A_50 mesurées avec une base d'extensomètre de 50 mm à des valeurs d'allongement pour cent Aso mesurées avec une base d'extensomètre de 80 mm. Dans le cas particulier d'une éprouvette de même géométrie prise dans une même matière, la valeur d'allongement pour cent $A_{50}$ sera plus élevée que la valeur d'allongement pour cent Aso et donnée par la relation : $A_{50}$= Ag + ($A_{80}$ - Ag)*80/50 où Ag, en %, est l'extension plastique à la force maximale, aussi appelé « allongement généralisé » ou « allongement à striction ».

Les résultats des essais mécaniques sont récapitulés dans le Tableau 4.

**Tableau 4** Résultat des essais mécaniques

| Alliage | Caractéristiques mécaniques | | | | | | | |
|---|---|---|---|---|---|---|---|---|
| | T4 | | | | T4 + Cuisson Peintures | | | |
| | $Rp_{0,2}$ (MPa) | Rm (MPa) | Ag (%) | A80 (%) | $R_{p0,2}$ (MPa) | Rm (MPa) | Ag (%) | A80 (%) |
| 1 | 87 | 206 | 21,3 | 27,0 | 205 | 263 | 8,6 | 8,6 |
| 2 | 156 | 299 | 19,8 | 23,0 | 272 | 331 | 10,2 | 11,2 |
| 3 | 183 | 287 | 19,6 | 22,7 | 299 | 358 | 12,4 | 13,7 |
| 4 | 110 | 237 | 22,0 | 25,3 | 199 | 272 | 14,8 | 19,9 |
| 5 | 111 | 238 | 21,7 | 24,1 | 204 | 276 | 14,3 | 17,4 |
| 6 | 111 | 240 | 21,8 | 24,5 | 206 | 277 | 14,1 | 17,0 |
| 7 | 112 | 241 | 20,6 | 22,8 | 210 | 282 | 13,8 | 16,5 |
| 8 | 188 | 337 | 19,6 | 22,2 | 278 | 364 | 16,8 | 20,6 |
| 9 | 171 | 329 | 22,2 | 25,7 | 275 | 362 | 15,5 | 18,1 |

On note que les propriétés mécaniques à l'état T4 ou T4 + cuisson des peintures des alliages selon l'invention sont supérieures à celles des alliages de référence sauf sans le cas de l'alliage 3, mais celui-ci présente une soudabilité insuffisante .

On a également caractérisé pour les produits selon l'invention les propriétés mécaniques après 5% de déformation selon la direction perpendiculaire à la direction de laminage et un traitement thermique de 30 min à 205 °C, caractéristique d'un traitement de précipitation post-formage, ainsi que les caractéristiques de pliage.

Le test de pliage trois points a été réalisé suivant la norme NF EN ISO 7438 et la procédure VDA 238-100. Le dispositif de pliage est tel que présenté sur la figure 8.

On effectue le « pliage trois points » de la tôle T d'épaisseur t en utilisant un poinçon B de rayon r=0.2 mm, la tôle étant supportée par deux rouleaux R, l'axe de pliage étant perpendiculaire à la direction de pré-traction. Les rouleaux ont un diamètre de 30 mm et la distance entre les axes des rouleaux est égale à 30 + 2t mm, t étant l'épaisseur de la tôle testée. Au début de l'essai le poinçon est mis en contact avec la tôle avec une pré-force de 30 Newtons. Une fois le contact établi, le déplacement du poinçon est indexé à zéro. Le test consiste alors à déplacer le poinçon de manière à effectuer le « pliage trois points » de la tôle. Le test s'arrête lorsqu'une microfissuration de la tôle conduit à une chute de force sur le poinçon d'au moins 30 Newtons, ou bien lorsque le poinçon s'est déplacé de 14.2 mm qui correspond à la course maximale autorisée. A la fin du test, l'échantillon de tôle se retrouve donc plié comme illustré en figure 9. La ductilité en service s'évalue alors par la mesure de l'angle de pliage a. Plus l'angle a est élevé, meilleure est l'aptitude au pliage de la tôle. L'angle a obtenu est normalisé selon l'équation :

$$\alpha_{norm} = \alpha \frac{\sqrt{t}}{\sqrt{ref}}$$

où ref correspond à l'épaisseur de 2 mm.

Les résultats de ces essais de pliage sur les tôles telles que fabriquées selon les conditions décrites au paragraphe « Préambule » sont donnés dans le Tableau X.

Les résultats des essais mécaniques et des essais de pliage après 5% de déformation et 30 min à 205 °C sont présentés dans le Tableau 5.

**Tableau 5.** Résultats des essais mécaniques et des essais de pliage

| Référence | 5% de déformation et 30 min à 205 °C | | | | |
|---|---|---|---|---|---|
| | Caractéristiques mécaniques | | | | Pliage |
| | $R_{p0,2}$ (MPa) | Rm (MPa) | Ag(%) | A80 (%) | $\alpha_{norm}$ |
| 8 | 372 | 396 | 5,9 | 7,1 | 53° |
| 9 | 340 | 376 | 8,6 | 11,0 | 64° |

**Mesure du LDH (Limit Dome Height)**

Ces mesures de LDH (Limit Dome Height) ont été réalisées afin de caractériser la performance en emboutissage des différentes tôles de cet exemple.

Le paramètre LDH est largement utilisé pour l'évaluation de l'aptitude à l'emboutissage des tôles d'épaisseur de 0,5 à 3,0 mm. Il a fait l'objet de nombreuses publications, notamment celle de R. Thompson, « The LDH test to evaluate sheet metal formability - Final Report of the LDH Committee of the North American Deep Drawing Research Group », SAE conference, Detroit, 1993, SAE Paper n°930815.

Il s'agit d'un essai d'emboutissage d'un flan bloqué en périphérie par un jonc. La pression de serre-flan est contrôlée pour éviter un glissement dans le jonc. Le flan, de dimensions 120 x 160 mm, est sollicité dans un mode proche de la déformation plane. Le poinçon utilisé est hémisphérique.

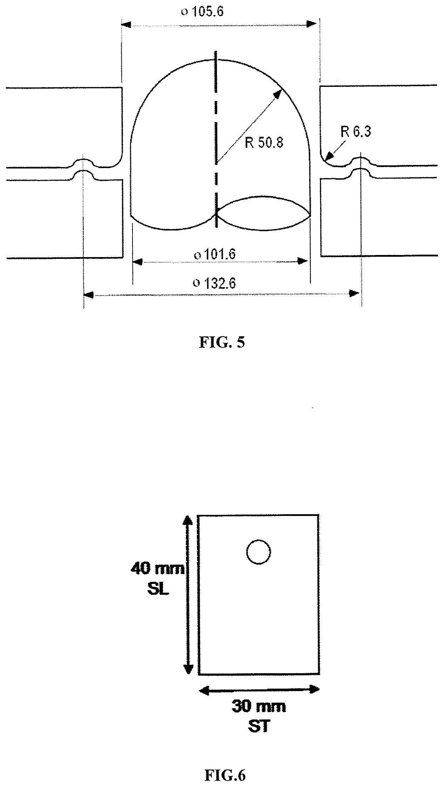

La figure 5 précise les dimensions des outils utilisés pour réaliser ce test.

La lubrification entre le poinçon et la tôle est assurée par de la graisse graphitée (graisse Shell HDM2). La vitesse de descente du poinçon est de 50 mm/min. La valeur dite LDH est la valeur du déplacement du poinçon à rupture, soit la profondeur limite de l'emboutissage. Elle correspond en fait à la moyenne de trois essais, donnant un intervalle de confiance à 95 % sur la mesure de 0,2 mm.

Le tableau 6 ci-après indique les valeurs du paramètre LDH obtenues sur des éprouvettes de 120 x 160 mm découpées dans les tôles précitées d'épaisseur 1,2 mm et pour lesquelles la dimension de 160 mm était positionnée parallèlement à la direction de laminage.

**Tableau 6** Résultats des essais de formabilité

| Référence | Formabilité |
|---|---|
| | LDH120 (mm) |
| 1 | 23,9 |
| 2 | |
| 3 | |
| 4 | 26,0 |
| 5 | 26,3 |
| 6 | 26,1 |
| 7 | 26,3 |
| 8 | 26,7 |
| 9 | 27,7 |

**Evaluation de la résistance à la corrosion**

L'essai de corrosion inter granulaire selon la norme ISO 11846 consiste à immerger les éprouvettes selon la figure 6 pendant 24 h dans une solution de chlorure de sodium (30 g/l) et d'acide chlorhydrique (10 ml/l) à une température de 30°C (obtenue au moyen d'un maintien en étuve sèche), après un décapage à la soude à chaud (5 % massique) et à l'acide nitrique (70 % massique) à température ambiante.

Les échantillons ont une dimension de 40 mm (sens de laminage) x 30 mm x épaisseur. Le type et la profondeur de la corrosion occasionnée sont déterminés par un examen en coupe micrographique du métal. On mesure la profondeur de corrosion médiane et maximum sur chaque échantillon.

Les résultats sont récapitulés au Tableau 7 ci-après.

**Tableau 7** Résultats des essais de corrosion

| Référence | Corrosion inter granulaire | |
|---|---|---|
| | Profondeur médiane corrodée ($\mu$m) | Profondeur maximale corrodée ($\mu$m) |
| 1 | 141 | 164 |
| 2 | | |
| 3 | 61 | 91 |
| 4 | 30 | 67 |
| 5 | 36 | 78 |
| 6 | 48 | 72 |
| 7 | 76 | 101 |
| 8 | 117 | 134 |
| 9 | 115 | 138 |

On note que l'amélioration du compromis entre la qualité du soudage et de la résistance mécanique notamment pour les exemples 8 et 9 selon l'invention, est réalisée sans altération notable de la résistance à la corrosion.

**Revendications**

1. Procédé de soudage de demi-produits monolithiques en alliage d'aluminium par laser sans fil d'apport, comportant les étapes suivantes :

    - Approvisionnement d'au moins deux demi-produits monolithiques en alliage d'aluminium dont l'un au moins est une tôle laminée de composition (% en poids) :

    Si: 2,5-14,
    Fe : 0,05-0,8,
    Cu: 0,25 - 1.0,
    Mg : 0,05-0,8,
    Mn : $\leq$ 0,70,
    Cr : $\leq$ 0,35,
    Ti : 0,02-0,30,
    Sr jusqu'à 500 ppm,
    Na jusqu'à 200 ppm,
    Sb jusqu'à 0,15 %,
    impuretés inévitables < 0,05 chacune et < 0,15 au total, reste aluminium,

    - Soudage des demi-produits en alliage d'aluminium par laser sans fil d'apport.

2. Procédé selon la revendication 1, **caractérisé en ce que** ladite tôle présente à l'état T4 $Rp_{0,2} \geq 165$ MPa et préférentiellement $Rp_{0,2} \geq 175$ MPa et/ou Rm $\geq$ 310 MPa et préférentiellement Rm $\geq$ 330 MPa.

3. Procédé selon la revendication 1 ou la revendication 2, **caractérisé en ce que** ladite tôle présente après traitement représentatif de la cuisson des peintures, écrouissage en traction de 2% suivi de 20 min à 180°C, $Rp_{0,2} \geq 240$ MPa et préférentiellement $Rp_{0,2} \geq 260$ MPa et/ou Rm $\geq$ 340 MPa et préférentiellement Rm $\geq$ 360 MPa.

4. Procédé selon une quelconque des revendication 1 à 3 **caractérisé en ce que** ladite tôle présente après un traitement simulant la précipitation post-formage, écrouissage en traction de 5% selon la direction perpendiculaire à la direction de laminage suivi de 30 min à 205 °C, $Rp_{0,2} \geq 280$ MPa, préférentiellement $Rp_{0,2} \geq 310$ MPa et de manière préférée

$Rp_{0,2} \geq 350$ MPa et/ou Rm $\geq 330$ MPa et préférentiellement Rm $\geq 360$ MPa et de manière préférée Rm $\geq 380$ MPa et/ou un angle de pliage normalisé $\alpha_{norm}$ mesuré selon la norme NF EN ISO 7438 et la procédure VDA 238-100 d'au moins 50° et de préférence d'au moins 60°.

5. Procédé selon l'une des revendications 1 à 4 **caractérisé en ce que** la teneur en Mg est comprise entre 0,3 et 0,5 %.

6. Procédé selon l'une des revendications 1 à 5 **caractérisé en ce que** la teneur en Si est comprise entre 2,5 et 10,0 % et de préférence entre 2,7 et 5,0 %.

7. Procédé selon l'une des revendications 1 à 6 **caractérisé en ce que** la teneur en Sr est comprise entre 200 et 400 ppm et / ou la teneur en Na est comprise entre 20 et 200 ppm et /ou la teneur en Sb est comprise entre 0,04 et 0,15 %.

8. Procédé selon l'une des revendications 1 à 7 **caractérisé en ce que** la teneur en Fe est comprise entre 0,15 et 0,60 %.

9. Procédé selon l'une des revendications 1 à 8 **caractérisé en ce que** la teneur en Cu est comprise entre 0,3 et 0,9 % et de préférence entre 0,5 et 0,8%.

10. Procédé selon l'une des revendications 1 à 9 **caractérisé en ce que** la teneur en cuivre est de 0,5 - 0,8%.et la teneur en Mg de 0.3 - 0.5%.

11. Procédé selon une quelconque des revendications 1 à 10, **caractérisé en ce que** ledit soudage des demi-produits en alliage d'aluminium par laser sans fil d'apport est réalisé par superposition ou en configuration bout à bout.

12. Procédé selon l'une des revendications 1 à 11 **caractérisé en ce que** les dits demi-produits constituent des composants de structure automobile et/ou des composants de caisse en blanc automobile et/ou des composants de peau de véhicule automobile et/ou des composants d'ouvrants de véhicule automobile.

13. Composant de structure, de caisse en blanc, de peau ou d'ouvrant de véhicule automobile, **caractérisé en ce qu'**il est obtenu par le procédé selon l'une des revendications 1 à 12.

**Patentansprüche**

1. Verfahren zum Schweißen von monolithischen Halbzeugen aus Aluminiumlegierung mittels Laser ohne Schweißdraht, umfassend die folgenden Schritte:

   - Bereitstellung von mindestens zwei monolithischen Halbzeugen aus Aluminiumlegierung, von denen mindestens eines ein gewalztes Blech der Zusammensetzung (Gew.-%) ist:

   Si: 2,5-14,
   Fe: 0,05-0,8,
   Cu: 0,25-1,0,
   Mg: 0,05-0,8,
   Mn: $\leq 0,70$,
   Cr: $\leq 0,35$,
   Ti: 0,02-0,30,
   Sr bis zu 500 ppm,
   Na bis zu 200 ppm,
   Sb bis zu 0,15 %,
   unvermeidbare Verunreinigungen jeweils < 0,05 und insgesamt < 0,15, Rest Aluminium,

   - Schweißen der Halbzeuge aus Aluminiumlegierung mittels Laser ohne Schweißdraht.

2. Verfahren nach Anspruch 1, **dadurch gekennzeichnet, dass** das Blech im Zustand T4 $R_{p0,2} \geq 165$ MPa und vorzugsweise $R_{p0,2} \geq 175$ MPa und/oder $R_m \geq 310$ MPa und vorzugsweise $R_m \geq 330$ MPa aufweist.

3. Verfahren nach Anspruch 1 oder Anspruch 2, **dadurch gekennzeichnet, dass** das Blech nach einer für das Einbrennen der Lacke repräsentativen Behandlung, einer Zugumformung von 2 % gefolgt von 20 min bei 180°C, $R_{p0,2}$

$\geq$ 240 MPa und vorzugsweise $R_{p0,2} \geq$ 260 MPa und/oder $R_m \geq$ 340 MPa und vorzugsweise $R_m \geq$ 360 MPa aufweist.

4.  Verfahren nach einem der Ansprüche 1 bis 3, **dadurch gekennzeichnet, dass** das Blech nach einer die Ausscheidung nach der Formgebung simulierenden Behandlung, einer Zugumformung von 5 % in einer Richtung senkrecht zur Walzrichtung gefolgt von 30 min bei 205°C, $R_{p0,2} \geq$ 280 MPa, vorzugsweise $R_{p0,2} \geq$ 310 MPa und bevorzugt $R_{p0,2} \geq$ 350 MPa und/oder $R_m \geq$ 330 MPa und vorzugsweise $R_m \geq$ 360 MPa und bevorzugt $R_m \geq$ 380 MPa und/oder einen normierten Biegewinkel $\alpha norm$, gemessen nach NF EN ISO 7438 und VDA-Verfahren 238-100, von mindestens 50° und vorzugsweise mindestens 60° aufweist.

5.  Verfahren nach einem der Ansprüche 1 bis 4, **dadurch gekennzeichnet, dass** der Mg-Gehalt zwischen 0,3 und 0,5 % liegt.

6.  Verfahren nach einem der Ansprüche 1 bis 5, **dadurch gekennzeichnet, dass** der Si-Gehalt zwischen 2,5 und 10,0 % und vorzugsweise zwischen 2,7 und 5,0 % liegt.

7.  Verfahren nach einem der Ansprüche 1 bis 6, **dadurch gekennzeichnet, dass** der Sr-Gehalt zwischen 200 und 400 ppm und/oder der Na-Gehalt zwischen 20 und 200 ppm und/oder der Sb-Gehalt zwischen 0,04 und 0,15 % liegt.

8.  Verfahren nach einem der Ansprüche 1 bis 7, **dadurch gekennzeichnet, dass** der Fe-Gehalt zwischen 0,15 und 0,60 % liegt.

9.  Verfahren nach einem der Ansprüche 1 bis 8, **dadurch gekennzeichnet, dass** der Cu-Gehalt zwischen 0,3 und 0,9 % und vorzugsweise zwischen 0,5 und 0,8 % liegt.

10.  Verfahren nach einem der Ansprüche 1 bis 9, **dadurch gekennzeichnet, dass** der Kupfergehalt 0,5 - 0,8 % und der Mg-Gehalt 0,3 - 0,5 % beträgt.

11.  Verfahren nach einem der Ansprüche 1 bis 10, **dadurch gekennzeichnet, dass** das Schweißen der Halbzeuge aus Aluminiumlegierung mittels Laser ohne Schweißdraht durch Übereinanderlegen oder in Stumpfstoßkonfiguration durchgeführt wird.

12.  Verfahren nach einem der Ansprüche 1 bis 11, **dadurch gekennzeichnet, dass** die Halbprodukte Kraftfahrzeugstrukturbauteile und/oder Kraftfahrzeugkarosseriebauteile und/oder Kraftfahrzeughautbauteile und/oder Kraftfahrzeugtür- bzw. Kraftfahrzeugöffnungsbauteile darstellen.

13.  Struktur-, Karosserie-, Haut- oder Tür- bzw. Öffnungsbauteil eines Kraftfahrzeugs, **dadurch gekennzeichnet, dass** es nach dem Verfahren gemäß einem der Ansprüche 1 bis 12 erhalten wird.

**Claims**

1.  A method for laser welding, without filler wire, monolithic semifinished products made of aluminium alloy, comprising the following steps:

    - supplying at least two monolithic semifinished products made of aluminium alloy, at least one of which is a rolled sheet with the composition (% by weight):

        Si: 2.5-14,
        Fe: 0.05-0.8,
        Cu: 0.25-1.0,
        Mg: 0.05-0.8,
        Mn: $\leq$ 0.70,
        Cr: $\leq$ 0.35,
        Ti: 0.02-0.30,
        Sr up to 500 ppm,
        Na up to 200 ppm,
        Sb up to 0.15%,
        unavoidable impurities < 0.05 each and < 0.15 in total, remainder aluminium,

- laser welding, without filler wire, the semifinished products made of aluminium alloy.

2. The method according to claim 1, **characterised in that** said sheet has in the T4 temper $Rp_{0.2} \geq 165$ MPa and preferably $Rp_{0.2} \geq 175$ MPa and/or $Rm \geq 310$ MPa and preferably $Rm \geq 330$ MPa.

3. The method according to claim 1 or claim 2, **characterised in that** said sheet has, after treatment representative of the curing of paints, strain hardening under stretching of 2% followed by 20 minutes at 180°C, $Rp_{0.2} \geq 240$ MPa and preferably $Rp_{0.2} \geq 260$ MPa and/or $Rm \geq 340$ MPa and preferably $Rm \geq 360$ MPa.

4. The method according to any one of claims 1 to 3, **characterised in that** said sheet has, after a treatment simulating post-forming precipitation, strain hardening under stretching of 5% in the direction perpendicular to the direction of rolling, followed by 30 minutes at 205°C, the sheet has $Rp_{0.2} \geq 280$ MPa, preferably $Rp_{0.2} \geq 310$ MPa and most preferably $Rp_{0.2} \geq 350$ MPa and/or $Rm \geq 330$ MPa and preferably $Rm \geq 360$ MPa and most preferably $Rm \geq 380$ MPa and/or a normalised bending angle $\alpha_{norm}$ measured according to standard NF EN ISO 7438 and the procedure VDA 238-100 of at least 50° and preferably at least 60°.

5. The method according to one of claims1 to 4, **characterised in that** the Mg content is between 0.3 and 0.5%.

6. The method according to one of claims 1 to 5, **characterised in that** the Si content is between 2.5 and 10.0 % and preferably between 2.7 and 5.0%.

7. The method according to one of claims 1 to 6, **characterised in that** the Sr content is between 200 and 400 ppm and/or the Na content is between 20 and 200 ppm and/or the Sb content is between 0.04 and 0.15%.

8. The method according to one of claims 1 to 7, **characterised in that** the Fe content is between 0.15 and 0.60 %.

9. The method according to one of claims 1 to 8, **characterised in that** the Cu content is between 0.3 and 0.9% and preferably between 0.5 and 0.8%.

10. The method according to one of claims 1 to 9, **characterised in that** the copper content is 0.5-0.8% and the Mg content is 0.3-0.5%.

11. The method according to any one of claims 1 to 10, **characterised in that** said laser welding, without filler wire, of semifinished products made of aluminium alloy is carried out by superposition or in end-to-end configuration.

12. The method according to one of claims 1 to 11, **characterised in that** said semifinished products constitute automobile structure components and/or automobile body-in-white components and/or motor-vehicle skin components and/or motor-vehicle closure components.

13. A structural, body-in-white, skin or closure component of an automobile, **characterised in that** it is obtained by the method according to one of claims 1 to 12.

FIG. 1

FIG. 2

**FIG. 3**

**FIG. 4**

ɔ 105.6

R 50.8

R 6.3

ɔ 101.6

ɔ 132.6

**FIG. 5**

40 mm
SL

30 mm
ST

**FIG.6**

FIG.7

FIG. 8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4897124 A
- JP 2006104580 B
- US 20050155676 A
- JP 1995109537 B
- US 20050100473 A

**Littérature non-brevet citée dans la description**

- **H. ZHAO ; D. R. WHITE ; T. DEBROY.** Current issues and problems in laser welding of automotive aluminum alloys. *International Materials Reviews,* 01 Juin 1999, vol. 44 (6), 238-266
- **A. WALKER ; G. FLOREY.** Advanced Aluminum 5XXX and 6XXX for complex Door Inner Panels and Consideration for an Aluminum-specific Design. Novelis Switzerland SA
- *Bad Nauheim - Doors and Closures in Car Body Engineering,* 2014
- **R. BROCKMANN ; C. BASSI.** *Laser Remote Welding of Aluminum without filler,* 19 Avril 2012
- **R. THOMPSON.** The LDH test to evaluate sheet metal formability - Final Report of the LDH Committee of the North American Deep Drawing Research Group. *SAE conference, Detroit,* 1993